# EUROPEAN PATENT SPECIFICATION

(11) **EP 1 444 097 B1**
(45) Date of publication and mention of the grant of the patent: **04.05.2005**
(21) Application number: 02774991.0
(22) Date of filing: 11.11.2002
(51) Int. Cl.: B32B 27/12, B32B 27/32, D06N 3/04, B60R 21/16

(54) **SILANE-CROSSLINKED POLYOLEFIN COATED FABRICS FOR AIRBAGS**
MIT SILAN-VERNETZTEM POLYOLEFIN BESCHICHTETES TEXTILMATERAL FÜR AIRBAGS
TISSUS ENDUITS DE POLYOLEFINES RETICULES PAR UN SILANE POUR COUSSINS GONFLABLES DE SECURITE

(30) Priority: 16.11.2001 GB 0127472
(43) Date of publication of application: 11.08.2004
(73) Proprietor: Dow Corning Corporation, Midland, Michigan 48611 (US)
(72) Inventor: JAMES, Stephen, Vale of Glamorgan CF62 6JW (GB); LAWSON, David, Whitchurch, Cardiff CF14 7AD (GB); LUCAS, Stephen, St. Fagans, Cardiff CF5 6EF (GB)
(74) Representative: Davies, Peter Vaughan
(86) International application number: PCT/GB2002/005071
(87) International publication number: WO 2003/043817

(56) References cited:
- EP-A- 0 496 894
- EP-A- 0 649 936
- WO-A-00/78543
- GB-A- 1 536 562
- DATABASE WPI Section Ch, Week 199437 Derwent Publications Ltd., London, GB; Class A95, AN 1994-299500 XP002228944 & JP 06 227347 A (KURARAY CO LTD), 16 August 1994 (1994-08-16) cited in the application

## Description

### FIELD OF THE INVENTION

The present invention relates to air bags formed of coated fabrics and to their production, wherein the coated fabric is capable of maintaining a pressure barrier between two areas with a pressure differential.

### BACKGROUND TO THE INVENTION

Coating compositions for textile substrates, which provide a flexible coat on the fabric, e.g. to decrease permeability of the fabric or to improve thermal protection of the fabric are well known in the art, and are described for example in EP-A-553840, WO01/12894, JP-A-6-227347 and EP-A-886164. Most of such coating compositions are based on silicone elastomers.

While fabrics coated with such compositions may be satisfactory for many air bag applications, they do not satisfy requirements where pressurised fluids are to be retained in a fabric envelope for a relatively long period. This requirement exists for example in the application of such coatings to side curtain air bags for the automotive industry. These side curtain air bags are intended to inflate at the time of impact, as do conventional air bags. The side curtains unfold to form a cushioned curtain between passengers and some of the side of the car body, e.g., the windows. As the intention is not merely to cushion the blow on impact itself, as is the case for conventional driver and passenger airbags, but e.g. to protect passengers when a car is rolling, it is important that the side curtain air bag is sufficiently pressurised during such rolling process. Where conventional driver and passenger airbags only need to retain pressure for a fraction of a second, it is desirable that side curtain air bags maintain a suitable pressure for a few seconds. Similar applications exist where a pressurised fabric structure is desired to maintain a certain fluid pressure for a relatively extended period of time, e.g. in emergency chutes for aeroplanes, inflatable rafts etc.

### DESCRIPTION OF THE INVENTION

The fabric used in the air bags according to the invention is coated with an olefin polymer crosslinked via grafted trialkoxysilane units which are crosslinked by hydrolysis and condensation of the alkoxysilane moieties.

The olefin polymer is preferably polyethylene, for example medium density polyethylene (MDPE) of density 0.935 to 0.955 g/mL or low density polyethylene (LDPE) of density 0.918 to 0.935 g/mL but can alternatively be an ethylene copolymer such as an ethylene vinyl acetate copolymer (EVA) containing for example 5 to 30% by weight vinyl acetate units or a copolymer of ethylene with up to 30% by weight of another olefin such as propylene, 1-butene or 1-hexene, or an ethylene propylene diene terpolymer containing up to 5% by weight diene units.

The olefin polymer can be grafted with trialkoxysilane units by reaction with an alkenyl trialkoxy silane in the presence of a catalyst. The alkoxy groups of the trialkoxysilane preferably have 1 to 4 carbon atoms, particularly methoxy or ethoxy groups. The preferred alkenyl group is vinyl although allyl and hexenyl are alternatives. One example of a preferred alkenyl trialkoxy silane is vinyl trimethoxy silane. The grafting reaction can for example be carried out at elevated temperature in the presence of a peroxide catalyst such as benzoyl peroxide. The level of alkenyl trialkoxy silane grafted to the olefin polymer can for example be (0.2-20% by weight?). Suitable grafted polyethylenes are sold by AEI Compounds Limited of Gravesend, Kent, GB under the trade names SX700, SX708 and SX408.

The grafted polymer can contain a filler, preferably a reinforcing filler such as carbon black or silica, titania or glass microspheres. Suitable other fillers include ground quartz, ground cured silicone rubber particles and calcium carbonate. The amount of filler can for example be up to 25% by weight of the grafted polymer composition, but filler is preferably absent or present at no more than 5%. Other additional components may be included in the grafted polymer composition, for example dyes, adhesion promoters, colorants, pigments, viscosity modifiers or flexibilisers. Adhesion promoters include epoxy-functional or amino-functional organosilicon compounds or organotitanates.

The grafted polymer can be processed as a thermoplastic before being crosslinked. Crosslinking is brought about in a subsequent process by the action of moisture. In the presence of moisture, the alkoxysilane groups are hydrolysed to silanol groups with a subsequent condensation reaction between silanol groups attached to different polymer molecules. The polymer composition preferably includes a condensation catalyst, for example a metallic or organometallic carboxylate such as dibutyltin dilaurate (DBTDL) or stannous octoate, preferably at 0.1-20% by weight based on the grafted polymer. The rate of crosslinking is determined by the rate of diffusion of moisture into the system and by the level of catalyst. It may be preferred to incorporate the catalyst at the final processing stage before crosslinking. Alternatively a grafted polymer composition containing catalyst can be sealed from moisture until it is coated on a fabric, at which point the large surface area to volume ratio allows rapid moisture diffusion and crosslinking.

The invention thus includes a process for producing air bags, characterised in that a fabric is coated with an olefin polymer grafted with trialkoxy silane units and the grafted olefin polymer is subsequently crosslinked by hydrolysis and condensation of the alkoxysilane moieties.

In one preferred coating process, the fabric is coated by extrusion coating of the grafted olefin polymer. The polymer can for example be extruded through a slit die onto a fabric carried by a cooled backing roller. Alternatively the grafted olefin polymer can be coated on the fabric by laminating a heated film of the grafted olefin polymer to the fabric. The fabric can for example be coated by a hot melt coating technique in which molten grafted olefin polymer is applied to a heated 2-roll mill, for example by extrusion, to form a film and the resulting film is laminated to the fabric at a nip. Another preferred coating process is hot melt coating, in which for example the grafted polymer composition is extruded onto the nip of rollers one of which has a less adhesive surface so that a polymer film is carried from the nip by the other roller and is contacted with the fabric at a subsequent nip on that roller. Further alternative coating processes include spraying, gravure coating, bar coating, coating by knife-over-roller, coating by knife-over-air, padding and screen-printing. The coating is preferably applied as a solventless, e.g. molten, composition, but can be dissolved in an organic solvent if desired.

It is preferred that the composition is applied to a coat-weight prior to curing of at least 25 g/m². Preferably the coating thickness is from 25 to 150g/m², more preferably 60 to 130g/m² for applications where pressure needs to be maintained longer, e.g. in side curtain airbags, or 30 to 50 g/m² for applications where the pressure retention is not so critical over prolonged periods, e.g. in standard driver airbags. Although it is not preferred, it is possible to apply the composition in multiple layers, which together have the thickness set out above. It is also possible to apply onto the coating composition a further coating, e.g. of a material providing low friction, or an additional textile fabric, whether woven or non-woven, to improve the strength and/or the feel of the fabric.

Preferred fabrics for use as substrate in the present invention may be made from synthetic fibres or blends of natural and synthetic fibres, and include polyamide, polyester, polyimide, polyethylene, polypropylene, polyester-cotton or glass fibre fabrics, most preferably polyamide fibres such as Nylon 6,6. They are preferably woven fabrics.

When the coated fabric is used to form the air bags, the coating is preferably present on the surface of the air bag remote from the inflation source of the air bag, and optionally also on the surface of the air bag nearer the inflation source. If both sides of the fabric are coated, the total coating weight is preferably no more than 150 g/m².

The crosslinked olefin polymer coating has a tear strength and elongation similar to that of silicone rubbers used commercially as air bag coatings, but has a substantially higher tensile strength, for example 50 to 100% higher. This has the advantage that the air bag coating does not fail by pinhole formation related to weakness of the coating film. Air bags coated according to the invention retain 0.5 bar pressure after 10 seconds inflation time, which is adequate pressure retention for side curtain air bags.

The invention is illustrated by the following Examples:

### Example 1

A silane grafted polyethylene supplied by AEI Compounds, which is believed to be LDPE grafted with vinyl trimethoxy silane, was applied to fabric using a so-called hot melt coating technique. The coating material itself, when prepared and crosslinked in sheet form using 95% grafted polyethylene and 5% DBTDL catalyst gave the following physical properties: - tear strength - 40kN/m; elongation at break - 650%; Shore A hardness - 80; tensile strength - 12 MPa.

The silane grafted polyethylene was extruded at 170oC onto a heated 2-roll mill and thereby coated onto both sides of a miniature inflatable curtain type airbag, itself prepared from a nylon-6, 6 woven fabric. The heated 2-roll mill was set at approx 170C to ensure formation of a suitable molten film required for the lamination process. The coating weight on the fabric was approximately 150 g/m². The coated fabric was exposed to the atmosphere for a few days to initiate crosslinking of the methoxy silane sites, and the coated bags were subsequently deployed to test their pressure retention characteristics.

The coated miniature airbags thus produced from the hot melt coating trial were subjected to a cold gas inflation test that simulates the conditions to be experienced by the full size airbag. The bags retained 0.5 bar pressure after 10 seconds inflation time. There was partial delamination of the coating from the fabric in the inflation test; these locations were the source of pressure leakage. If the fabric or coating composition is modified to increase adhesion, even better pressure retention can be expected.

### Example 2

The grafted polyethylene composition of Example 1 was extrusion coated onto nylon-6, 6 woven fabric supported on a chilled roll. The polymer composition was extruded through a computer controlled slot die to give a coating weight of 40 g/m² on the fabric. This trial produced a single sided coating onto plain fabric, hence no inflation testing was possible. Again, adhesion was observed to be poor, but the feasibility of applying a thin film was proven. This coat weight yielded a very foldable, low friction material. Both these features are extremely important in the end application where the coated airbag needs to be tightly folded yet must deploy smoothly and rapidly without self adhering (blocking).

## Claims

1. Use of an olefin polymer crosslinked via grafted trialkoxy silane units which are crosslinked by hydrolysis and condensation of the alkoxysilane moieties as a coating for air bags.

2. Use according to Claim 1, **characterised in that** the crosslinked olefin polymer is crosslinked polyethylene.

3. Use according to Claim 1 or Claim 2, **characterised in that** the grafted trialkoxy silane units are derived from an alkenyl trialkoxy silane.

4. Use according to Claim 3 **characterised in that** the alkenyl trialkoxy silane is vinyl trimethoxy silane.

5. Use according to any of Claims 1 to 4, **characterised in that** the fabric from which the air bag is made is coated with the olefin polymer grafted with trialkoxy silane units and the grafted olefin polymer is subsequently crosslinked by hydrolysis and condensation of the alkoxysilane moieties.

6. Use according to Claim 5, **characterised in that** the fabric is coated by extrusion coating of the grafted olefin polymer.

7. : Use according to Claim 5, **characterised in that** the fabric is coated by lamination of a heated film of the grafted olefin polymer to the fabric.

8. Use according to Claim 7, **characterised in that** the fabric is coated by a hot melt coating technique in which molten grafted olefin polymer is applied to a heated 2-roll mill to form a film and the resulting film is laminated to the fabric

9. An air bag formed of coated fabric, **characterised in that** the surface of the air bag remote from the inflation source of the air bag is coated with an olefin polymer crosslinked via grafted trialkoxy silane units which are crosslinked by hydrolysis and condensation of the alkoxysilane moieties.

10. A process for producing air bags in which a fabric is coated with a polymer and the coated fabric is formed into air bags, **characterized in that** the fabric is coated with an olefin polymer grafted with trialkoxy silane units and the grafted olefin polymer is subsequently crosslinked by hydrolysis and condensation of the alkoxysilane moieties.

## Patentansprüche

1. Verwendung eines Olefinpolymers, das über gepfropfte Trialkoxysilaneinheiten vernetzt ist, die durch Hydrolyse und Kondensation der Alkoxysilaneinheiten vernetzt sind, als Beschichtung für Airbags.

2. Verwendung gemäß Anspruch 1, **dadurch gekennzeichnet, dass** das vernetzte Olefinpolymer vernetztes Polyethylen ist.

3. Verwendung gemäß Anspruch 1 oder 2, **dadurch gekennzeichnet, dass** die gepfropften Trialkoxysilaneinheiten sich von einem Alkenyltrialkoxysilan ableiten.

4. Verwendung gemäß Anspruch 3, **dadurch gekennzeichnet, dass** das Alkenyltrialkoxysilan Vinyltrimethoxysilan ist,

5. Verwendung gemäß einem der Ansprüche 1 bis 4. **dadurch gekennzeichnet, dass** der Stoff, aus dem der Airbag gemacht ist, mit dem Olefinpolymer, das mit Trialkoxysilaneinheiten gepfropft ist, beschichtet wird und das gepfropfte Olefinpolymer anschließend durch Hydrolyse und Kondensation der Alkoxysilaneinheiten vernetzt wird.

6. Verwendung gemäß Anspruch 5, **dadurch gekennzeichnet, dass** der Stoff durch Extrusionsbeschichtung des gepfropften Olefinpolymers beschichtet wird.

7. Verwendung gemäß Anspruch 5, **dadurch gekennzeichnet, dass** der Stoff durch Laminierung einer erwärmten Folie aus dem gepfropften Olefinpolymer auf den Stoff beschichtet wird.

8. Verwendung gemäß Anspruch 7, **dadurch gekennzeichnet, dass** der Stoff durch eine Schmelzbeschichtungstechnik beschichtet wird, bei welcher geschmolzenes gepfropftes Olefinpolymer auf ein erwärmtes Zweiwalzenwerk aufgebracht wird, um eine Folie zu bilden, und die resultierende Folie auf den Stoff laminiert wird.

9. Airbag, der aus beschichtetem Stoff gebildet ist, **dadurch gekennzeichnet, dass** die Oberfläche des Airbags entfernt von der Zündeinheit des Airbags mit einem Olefinpolymer beschichtet ist, das über gepfropfte Trialkoxysilaneinheiten vernetzt ist, die durch Hydrolyse und Kondensation der Alkoxysilaneinheiten vernetzt sind.

10. Verfahren zur Herstellung von Airbags, in welchem ein Stoff mit einem Polymer beschichtet wird und der beschichtete Stoff zu Air bags geformt wird, **dadurch gekennzeichnet, dass** der Stoff mit einem Olefinpolymer, das mit Trialkoxysilaneinheiten gepfropft ist, beschichtet wird und das gepfropfte Olefinpolymer anschließend durch Hydrolyse und Kondensation der Alkoxysilaneinheiten vernetzt wird.

## Revendications

1. Utilisation d'un polymère d'oléfine réticulé par l'intermédiaire d'unités de trialcoxysilane greffé qui sont réticulées par hydrolyse et condensation des fragments alcoxysilane en tant que revêtement pour coussins gonflables de sécurité.

2. Utilisation selon la revendication 1, **caractérisée en ce que** le polymère d'oléfine réticulé est le polyéthylène réticulé.

3. Utilisation selon la revendication 1 ou la revendication 2, **caractérisée en ce que** les unités de trialcoxysilane greffé dérivent d'un trialcoxysilane d'alcényle.

4. Utilisation selon la revendication 3, **caractérisée en ce que** le trialcoxysilane d'alcényle est le triméthoxysilane de vinyle.

5. Utilisation selon l'une quelconque des revendications 1 à 4, **caractérisée en ce que** le tissu à partir duquel le coussin gonflable de sécurité est fabriqué est enduit avec le polymère d'oléfine greffé avec des unités de trialcoxysilane et le polymère d'oléfine greffé est par la suite réticulé par hydrolyse et condensation des fragments alcoxysilane.

6. Utilisation selon la revendication 5, **caractérisée en ce que** le tissu est enduit par enduction par extrusion du polymère d'oléfine greffé.

7. Utilisation selon la revendication 5, **caractérisée en ce que** le tissu est enduit par laminage d'un film chauffé du polymère d'oléfine greffé sur le tissu.

8. Utilisation selon la revendication 7, **caractérisée en ce que** le tissu est enduit par une technique d'enduction « hot melt » dans laquelle un polymère d'oléfine greffé en fusion est appliqué à un moulin à deux cylindres chauffé pour former un film et le film résultant est laminé sur le tissu.

9. Coussin gonflable de sécurité en tissu enduit, **caractérisé en ce que** la surface du coussin gonflable de sécurité éloignée de la source de gonflage du coussin gonflable de sécurité est enduite avec un polymère d'oléfine réticulé par l'intermédiaire d'unités de trialcoxysilane greffé qui sont réticulées par hydrolyse et condensation des fragments alcoxysilane.

10. Procédé pour la production de coussins gonflables de sécurité dans lesquels un tissu est enduit avec un polymère et le tissu enduit est façonné en coussins gonflables de sécurité, **caractérisé en ce que** le tissu est enduit avec un polymère d'oléfine greffé avec des unités de trialcoxysilane et le polymère d'oléfine greffé est par la suite réticulé par hydrolyse et condensation des fragments alcoxysilane.
